Europäisches Patentamt

(19) European Patent Office

Office européen des brevets

(11) Numéro de publication: **0 207 038**
**B1**

# (12) FASCICULE DE BREVET EUROPEEN

(45) Date de publication du fascicule du brevet:
08.11.89

(51) Int. Cl.⁴: **G 01 C 13/00**, G 01 N 9/24

(21) Numéro de dépôt: 86870067.5

(22) Date de dépôt: 15.05.86

(54) **Système densimétrique remorqué.**

(30) Priorité: 15.05.85 FR 8507448

(43) Date de publication de la demande:
30.12.86 Bulletin 86/52

(45) Mention de la délivrance du brevet:
08.11.89 Bulletin 89/45

(84) Etats contractants désignés:
BE DE FR GB IT NL

(56) Documents cités:
EP-A- 0 063 451
CH-A- 300 247
FR-A- 2 217 690
GB-A- 1 029 469

INTERNATIONAL ATOMIC ENERGY AGENCY,
RADIOISOTOPE INSTRUMENTS IN INDUSTRY AND
GEOPHYSICS, PROCEEDINGS OF THE SYMPOSIUM,
Warsaw, PL, 18-22 octobre 1965, vol. 1, pages 381-394,
Vienna, AT; J. PAPADOPOULOS et al.: "Radioisotope
technique for monitoring sediment concentration in
rivers and streams"
DE INGENIEUR, vol. 88, no. 48, 25 novembre 1976, pages
974-981, NL; A.L.G. GOULMY: "High resolution
bathymetry for analyses of seabed flatness"
Port Construction International, no. 2/3, 1984, pages
10-13: "Getting the measure of fluid mud.

(73) Titulaire: **D.O.S. DREDGING COMPANY LIMITED, Alba
House 238 High Street, Epping Essex CM6 4AP (GB)**

(72) Inventeur: **Kirby, Robert, 6, Queens Drive,
Taunton-Somerset (GB)**
Inventeur: **Parker, Reginald W., 3, Curdleigh Lane,
Taunton-Somerset (GB)**

(74) Mandataire: **Plucker, Guy et al, OFFICE
KIRKPATRICK 4 Square de Meeûs, B-1040 Bruxelles
(BE)**

## Description

La présente invention concerne un système densimétrique autonome remorqué pour la mesure continue de la densité en fonction de la profondeur de la vase marine, outre un procédé pour la détermination autonome de la profondeur navigable.

Au moyen des données collectées par cette mesure continue, il est possible d'enregistrer de façon précise et rapide la profondeur navigable, spécialement dans les ports.

Récemment, en particulier depuis 1970, la dimension des navires a beaucoup augmenté. De nouveaux chenaux de navigation plus profonds on été dragués dans les ports pour permettre à ces navires de pénétrer jusque dans les bassins. La question qui restait à résoudre était celle de la profondeur à draguer. Dans de nombreuses régions du monde, le fond des chenaux de navigation est recouvert de suspensions de boue fluide qui rendent difficile de définir la profondeur navigable.

Lorsqu'on utilisait la ligne plombée, la profondeur notée était celle d'un fond relativement ferme et la couche de boue le recouvrant éventuellement n'était habituellement pas détectée. Avec l'introduction des échosondeurs, l'interface entre l'eau et la boue n'est pas toujours clairement définie. L'interface affichée sur les enregistreurs peut dépendre de la nature de l'instrument utilisé et de la fréquence choisie. Les signaux de l'échosondeur sont habituellement réfléchis à l'interface entre l'eau de mer et le dessus de la vase fluide, de même qu'à l'interface entre la vase fluide et le lit bien consolidé. La première grandeur de réflexion ne tient pas compte du fait que la sécurité de la navigation n'est pas encore comprise par la présence de la couche supérieure de vase, tandis que la seconde grandeur de réflexion signale déjà le lit consolidé avec lequel la coque du navire ne peut jamais entrer en contact. L'absence d'une définition précise de l'interface eau-boue peut conduire à une inutile restriction de la profondeur ou à un dragage éventuellement excessif.

Il a été constaté que les navires peuvent naviguer dans la couche de vase fluide dont la navigabilité ne peut être déterminée par les échosondeurs. Une «profondeur de navigation» pratique restait donc à établir.

La profondeur de navigation est définie comme étant la profondeur maximale rapportée au niveau de référence des cartes maritimes qu'il est considéré comme sûr, aux fins de la navigation, de retenir comme étant le lit du chenal. Pour arriver à une définition du lit, il faut satisfaire aux deux critères suivants:

1) la coque du navire ne peut subir aucun dégât, même si son tirant devait atteindre la profondeur navigable complète;

2) la capacité de manoeuvre du navire ne peut être restreinte dans une mesure sensible.

La première condition est remplie lorsque le lit est fluide et que l'effort de cisaillement n'est pas exagéré, tandis que la seconde condition dépend d'un certain nombre de propriétés de la boue, notamment la densité et l'apparition d'ondes à l'interface entre l'eau et la boue fluide. Bien que ces facteurs et d'autres influencent la navigation, il est nécessaire pour les besoins pratiques du relevé hydrographique de choisir une propriété physique qui peut être mesurée avec une relative facilité en milieu marin et qui peut servir aussi de critère pour établir la profondeur navigable. Le paramètre le plus couramment utilisé est la masse volumique ou densité de la substance du lit.

Si la densité est retenue comme critère de définition pour la profondeur navigable, il est nécessaire d'en choisir une valeur qui est considérée comme sûre dans les conditions existantes dans une région particulière. Un jeu de 10% et davantage sous la quille est souvent exigé dans un chenal et est habituellement suffisant pour assurer que la coque du navire ne vienne jamais réellement en contact avec la suspension de boue fluide. Un jeu plus faible sous la quille peut être acceptable lorsque le navire évolue lentement en milieu calme, par exemple dans un bassin, en particulier si l'évolution est assistée par remorquage. Il existe des cas où des navires ont évolué sans dégât même avec la quille dans la boue fluide.

La profondeur navigable peut aussi être définie comme étant la profondeur à laquelle la vase a une densité telle qu'au-dessus de cette profondeur, les bateaux puissent naviguer avec sûreté. Cette densité dépend de la composition de la couche de boue fluide, comme la présence ou l'absence de métaux lourds, de bulles de gaz, etc. Toutefois, dans de nombreux ports, la densité définissant la profondeur navigable est d'environ 1, 2.

Au cours des recherches détaillées entreprises ces dernières années, différents procédés pour déterminer la densité de la couche de vase ont été mis au point.

Le premier a été d'analyser des échantillons au laboratoire, mais ce procédé a pour inconvénient d'être lent et donc d'imposer une limitation importante sur le nombre des échantillons qui peuvent être prélevés sur place.

Le second procédé utilise des sondes radioactives pour mesurer la densité in situ. La densité est notée à bord du bateau opérant le relevé de sorte qu'il ne faut pas d'échantillons pour une analyse en laboratoire.

Il existe deux types de jauges radioactives pour la mesure de la densité, à savoir le type à transmission et le type à rétrodiffusion. La sonde à transmission est un instrument en forme de H comprenant une source radioactive dans une branche et un détecteur dans l'autre. La source émet directement vers le détecteur. La sonde à transmission permet de connaître la moyenne de la densité avec une résolution de 3 cm en profondeur (à savoir la hauteur du cristal détecteur). Comme l'instrument doit s'enfoncer dans la vase par son propre poids, la forme en H constitue un inconvénient. Un exemple de sonde radioactive à transmission est décrit dans la demande de brevet européen 0 063 451.

La sonde à rétrodiffusion est plus robuste et contient la source radioactive et le détecteur dans un seul tube en forme de fuseau. La source émet le rayonnement dans toutes les directions et le détecteur, qui est monté au-dessus de la source et abrité de celle-ci par un écran en plomb, ne reçoit qu'une fraction du rayonnement. La sonde à rétrodiffusion enregistre les densités avec une résolution de 15 cm (à savoir la distance entre la source et le détecteur). En raison de sa forme, cette sonde pénètre plus facilement dans les fonds que la sonde à transmission.

Le procédé d'exploration consiste à descendre la sonde par-dessus bord au moyen d'une grue hydraulique à bord du navire hydrographique jusque juste au-dessus de la couche de vase. A partir de cette profondeur initiale, la sonde est descendue à une vitesse d'environ 15 cm par seconde. La densité de la couche de vase est mesurée sans interruption pendant la pénétration de la sonde (qui, en raison de son poids, pénètre dans une couche de vase de 3 à 4 m d'épaisseur). De plus, l'angle d'inclinaison et la profondeur sont mesurés à l'aide d'un inclinomètre et d'un détecteur de profondeur, respectivement. La densité, la profondeur et l'inclinaison sont enregistrées sur un diagramme x-y-y à bord du navire hydrographique. Ce procédé est à présent tout à fait opérationnel dans l'Europoort de Rotterdam, mais il ne permet qu'un nombre fort limité de mesures par jour.

Ce système de mesure à la verticale d'un point fixe a pour inconvénient que les mesures doivent être faites en des points particuliers. La profondeur réelle entre deux points est inconnue et on fait l'hypothèse d'une transition linéaire entre les deux points. Outre ce manque de précision, environ 60 à 70 lectures à peine peuvent être faites en un jour.

Il existe donc un besoin pour un instrument enregistrant de manière continue la profondeur d'un horizon d'une densité prescrite.

Devant la difficulté d'appliquer ce système de mesure à la verticale dans la Gironde à cause des courants de marée intense, du peu de durée de l'eau étale et des grandes quantités de sédiments que la Garonne et la Dordogne déversent annuellement dans l'estuaire ket qui vont et viennent avec les crues et décrues et marées océaniques, les autorités du port de Bordeaux ont mis au point un prototype de «profileur de sous-fond»: un poisson remorqué par un remorqueur dont le premier transmet au second une information continue sur la consistance du lit de boue.

Une description de ce prototype est donnée dans la revue «Port Construction International» N° 2/3, 1984, pp 10 - 13: Getting the measure of fluid mud.

Ainsi que le rapporte cet article, il a été constaté que le nombre de décibels d'un signal ultrasonore diminue lors du passage à travers une suspension et que cette atténuation augmente à mesure que la concentration de la suspension s'accroît. L'atténuation en décibels, en comparaison avec l'eau limpide, devrait être représentative de l'état rhéologique du milieu traversé par le signal.

Un grand nombre d'échantillons de boue fluide ont été rassemblés et ont fait l'objet d'une mesure de la concentration et de l'atténuation en décibels d'un signal ultrasonore afin d'établir et vérifier dans le temps et l'espace la relation entre l'atténuation du signal ultrasonore et la concentration de matières en suspension en g par litre.

Un transducteur en céramique de 860 kHz, ainsi qu'un détecteur de profondeur, ont été montés à la tête d'un poisson remorqué de 80 kg en forme de saumon. Ils transmettent l'atténuation du signal et la profondeur du poisson porteur à un ordinateur installé à bord du bateau remorquant la sonde.

Au moyen d'un treuil progressif à commande manuelle, la sonde est remontée lorsqu'elle a atteint une atténuation de 30 décibels correspondant à une concentration d'environ 450 g par litre. Dès que la sonde arrive au-dessus d'un niveau où l'atténuation du signal s'annule ou devient négligeable, elle est à nouveau descendue. A partir des données ainsi collectées, l'ordinateur peut tracer des courbes d'égale concentration en g par litre en fonction de la profondeur de la sonde.

Une nouvelle sonde ultrasonore plus légère en forme de «Concorde» est à l'étude et devrait fonctionner avec un remorqueur plus rapide.

Les principaux inconvénients de ce système sont l'imprécision relative des transducteurs soniques, la nécessité d'un échantillonnage continu pour établir et vérifier la relation entre l'atténuation du son et la concentration, la commande manuelle de la montée et de la descente de la sonde dans toute la gamme de concentrations de 0 à 450 g par litre et le temps nécessaire à cet effet (environ 1 minute par mouvement). En outre, ce système ne se prête pas à un fonctionnement à des densités au-delà de 1,3. Un inconvénient majeur est que l'appareil donne des résultats anormaux lorsque la boue fluide contient du gaz.

L'invention a dès lors pour but de procurer un système densimétrique autonome remorqué opérationnel complet pour la mesure continue de la densité en fonction de la profondeur de la vase marine, qui n'expose pas aux inconvénients indiqués ci-dessus.

L'invention a donc pour objet un système densimétrique remorqué pour la mesure continue de la densité en fonction de la profondeur de la vase marine comportant

— un poisson remorqué par un beateau remorqueur et équipé d'un moyen de mesure de la densité de la vase marine traversée et d'un détecteur de profondeur;

— un câble permettant de remorquer le poisson et de transmettre des données;

— un treuil pour manoeuvrer le poisson remorqué, en fonction des données qu'il a transmises;

— des moyens pour déterminer la position du bateau remorqueur par rapport à des points fixes sur terre ferme.

Le système densimétrique remorqué de l'invention est caractérisé en ce qu'il fonctionne de manière autonome et comporte des moyens pour localiser le poisson remorqué par rapport au bateau remorqueur.

Le poisson remorqué du système densimétrique selon l'invention est à profil hydrodynamique équilibré en pression et conçu pour permettre son passage dans une vase marine d'une densité pouvant s'élever jusqu'à 1,4 à une vitesse d'au moins deux noeuds.

Le moyen de mesure de la densité de la vase marine traversée est une sonde à transmission nucléaire à grande vitesse comportant une source radioactive et un détecteur, et munie de blindage de sécurité contre le rayonnement. Le treuil est commandé par ordinateur en fonction des données transmises, le dit ordinateur étant installé à bord du bateau remorqueur pour collecter toutes les données transmises par le poisson de même que pour enregistrer le temps et la position du bateau remorqueur dans le port, établir par intervalles réguliers une moyenne des taux de comptage instantanés du détecteur et la convertir en une lecture de densité, conserver toutes les données dans sa mémoire centrale, rassembler et calculer toutes les relations mutuelles et, en réponse aux résultats obtenus et en fonction d'un programme présélectionné, régler et commander le fonctionnement du treuil pour qu'il fasse monter ou descendre le poisson remorqué pour rechercher une profondeur ou une densité présélectionnée ou lui fasse suivre un trajet onduleux dans un contour de densité présélectionné, et afficher la synthèse des lectures à l'aide d'un dispositif d'affichage visuel.

Le poisson remorqué du système densimétrique suivant l'invention peut présenter une section frontale en forme de tunnel en U inversé et une section latérale en forme d'aile d'avion. Il peut présenter en position médiane à la partie terminale un aileron vertical inversé tourné vers le bas avec deux volets articulés horizontaux de part et d'autre et au-dessus de l'aileron inversé.

Dans une forme d'exécution avantageuse du système densimétrique suivant l'invention, la sonde à transmission nucléaire du poisson comporte un système de blindage de sécurité contre le rayonnement, qui comporte un piston. Ce piston porte la source radioactive et la maintient à l'intérieur d'un logement blindé en plomb au moyen d'un ressort de rentrée de sécurité, lorsque l'appareil ne fonctionne pas. Ce piston est, en service, repoussé vers l'extérieur par un organe d'actionnement à came, afin que la source vienne en face d'une fente étroite en face du détecteur de la sonde à transmission nucléaire.

Dans une autre forme d'exécution avantageuse de l'invention, le treuil est muni d'un moteur auxiliaire pour la remontée du matériel en cas d'une panne d'alimentation électrique à bord du bateau remorqueur.

Dans une autre forme d'exécution, le dispositif d'affichage visuel est une table traçante.

Dans une forme particulièrement avantageuse de réalisation du système densimétrique remorqué de l'invention, les moyens pour localiser le poisson remorqué par rapport au bateau remorqueur consistent en un transpondeur logé dans le poisson et au moins un transducteur à bord du bateau remorqueur.

Dans une autre forme d'exécution avantageuse de l'invention, les moyens pour localiser le poisson remorqué par rapport au bateau remorqueur consistent en des moyens de mesure de la longueur du câble dévidé du treuil, en un moyen de mesure de la profondeur du poisson constitué par le détecteur logé dans le poisson et en des moyens de calcul de la position du poisson à partir des dites mesures.

Avantageusement, les moyens pour déterminer la position du bateau remorqueur par rapport à des points fixes sur terre ferme consistent en au moins trois émetteurs de signaux de repérage et en au moins un capteur de ces signaux à bord du bateau remorqueur.

La présente invention a aussi pour objet un procédé pour la détermination de la profondeur navigable, (par exemple dans les ports), dans lequel au moyen d'un bateau remorqueur et d'un câble approprié, on entraîne un poisson dans des couches de vase marine et on détermine de manière continue et simultanée: (a) la densité et la profondeur de la couche de vase traversée, par des moyens logés dans le poisson, et (b) la position du poisson par rapport à des points fixes sur terre ferme.

Dans le procédé suivant l'invention, on utilise un poisson équilibré en pression et conçu pour permettre son passage dans une vase marine d'une densité s'élevant jusqu'à 1,4 à une vitesse d'au moins deux noeuds. La densité de la couche de vase marine est déterminée de manière continue au moyen d'une sonde à transmission nucléaire logée dans le poisson et ce en mesurant l'atténuation du taux de comptage instantané des rayons gamma émis par la source et captés par le détecteur, en établissant par intervalles réguliers la moyenne de ces signaux, avec une correction pour l'affaiblissement quotidien le da source gamma et en convertissant la moyenne corrigée du taux de comptage en une lecture de densité.

En réponse aux données provenant de la mesure de densité et/ou de profondeur, et au moyen d'un treuil commandé par ordinateur, on fait rechercher par le poisson une profondeur ou une densité présélectionnée ou on lui fait suivre un trajet onduleux de manière continue, au-dessus et au-dessous d'une couche de densité critique déterminant la profondeur navigable.

On enregistre toutes les données collectées au moyen d'un ordinateur, on conserve les informations dans sa mémoire centrale. On recherche et on analyse les informations et on les convertit en un système d'affichage visuel montrant la profondeur navigable.

Suivant une forme d'exécution particulière du procédé pour la détermination de la profondeur navigable de la présente invention, le dispositif d'affichage visuel est une table traçante.

Dans un procédé suivant l'invention, la position du poisson par rapport à des points fixes sur la terre ferme est déterminée par localisation du poisson par rapport au bateau remorqueur à l'aide d'un transpondeur logé dans le poisson et d'au moins un transducteur à bord du bateau remorqueur et par localisation du bateau remorqueur lui-même par rapport aux points fixes sur terre ferme d'où sont émis des signaux de repérage.

Dans une autre exécution du procédé selon l'invention, la position du poisson par rapport à des points fixes sur la terre ferme est déterminée par localisation du poisson par rapport au bateau remorqueur par un calcul combinant la mesure de la longueur du câble dévidé du treuil et de la mesure de la profondeur du poisson donnée par le détecteur de profondeur logé dans le poisson et par localisation du bateau remorqueur lui-même par rapport aux points fixes sur terre ferme d'où sont émis des signaux de repérage.

On ne dispose d'aucun ensemble de données exploitables pour aider à la conception d'un véhicule propre à passer à travers une vase marine de densité élevée à une vitesse relativement grande (deux noeuds et davantage). Vu l'absence totale d'expérience dans ce domaine, on ne disposait d'aucune indication sur la forme que devait prendre le poisson remorqué. Celui-ci a dû être créé de toutes pièces. Des poissons tels que ceux utilisés pour des études de l'eau de mer non vaseuse ont une forme ramassée et sont considérés comme impropres pour le remorquage dans la boue. Le «Saumon» ou le «Concorde» utilisé dans le port de Bordeaux outre la lenteur et l'imprécision des réponses de leurs détecteurs, ne fonctionnent pas dans de la vase d'une concentration de plus de 450 g par litre ou d'une densité supérieure à 1,3.

Comme déjà indiqué, la conception du poisson devait tenir compte des conditions particulières du remorquage dans la boue d'une densité considérable (jusqu'à 1,4). Ce point particulier ajoute un facteur supplémentaire portant au moins au triple le poids nominal du poisson. Les facteurs de traînée principaux à surmonter sont la traînée due à la pression et le frottement en surface. Il fallait donc un profil hydrodynamique régulier équilibré en pression avec un minimum de frottement en surface évitant les protubérances et rugosités pouvant favoriser l'accrochage ou l'entraînement de débris ou le coincement du poisson dans ceux-ci.

Une fonction principale du poisson est d'induire une poussée hydrodynamique ascensionnelle suffisante pour arriver à la profondeur souhaitée sans que le mou du câble ou le poids mort devienne exagéré. Lorsqu'il a pénétré dans la couche de vase, le poisson doit être capable de monter et descendre de façon régulière et continue dans les couches de densité définie, par exemple celles ayant des densités de 1,1 et 1,3. Ce cycle de montée et de descente doit être aussi bref que possible de façon à traverser la couche critique de profondeur navigable d'une densité d'environ 1,2 aussi souvent que possible, par exemple deux fois (une fois à la montée et une fois à la descente) toutes les 8 secondes.

Le poisson doit aussi constituer un abri approprié pour le dispositif détecteur. Le faisceau de la sonde densimétrique à transmission nucléaire doit être maintenu aussi horizontal que possible sans roulis ni tangage, c'est-à-dire sans dévers longitudinal ou latéral. Les deux éléments de la sonde densimétrique doivent se trouver des deux côtés du flux de boue à mesurer. Par conséquent, le poisson doit présenter un ventre ouvert dans lequel la vase s'écoule lorsque le poisson est remorqué.

Toutes les conditions ci-dessus font ressortir à quel point la conception seule du poisson est déjà une prouesse technique.

La sonde densimétrique à transmission nucléaire à grande vitesse du dispositif détecteur installé dans le poisson est une jauge densimétrique radioactive du type déjà décrit à propos du système de mesure à la verticale d'un point fixe. Néanmoins, au lieu de la sonde à rétrodiffusion d'usage général actuellement, il est préféré d'utiliser suivant l'invention une jauge du type à transmission. Ce type est plus précis puisqu'il permet d'établir la moyenne de la densité avec une résolution de 3 cm en profondeur. Parmi les sondes disponibles de ce genre, la préférence va aux sondes à grande vitesse afin d'obtenir le plus grand nombre possible de lectures dans le temps le plus bref et de pouvoir mesurer une densité de 1,00 à 1,50 avec une précision d'environ 0,025. La densité évolue dans le temps à des allures atteignant 0,3 par seconde. Il est nécessaire que le signal de sortie de l'instrument représente cette évolution avec un temps de réponse total de l'ordre d'une seconde pour l'étendue complète de l'échelle.

La sonde à transmission consiste en une source radioactive et en un détecteur. Ceux-ci sont logés séparément dans des boîtiers cylindriques scellés en vue de l'immersion jusqu'à une profondeur de 100 m dans l'eau. La source est le plus souvent une perle de céramique à double encapsulement de $^{137}$Cs. Elle a une demi-vie de 30 ans de sorte que la baisse d'activité n'est que d'environ 1,67% par an. Cela signifie que les taux de comtage sont pratiquement constants pendant 3 à 4 mois. La source est fixée dans un récipient blindé en acier spécial rempli de plomb qui fait que le rayonnement n'est émis que par une fente étroite et empêche le rayonnement gamma d'être émis dans toute autre direction. Pour des raisons de sécurité, la dose maximale à la surface du blindage ne peut excéder environ 0,75 mR par heure. Des dispositifs pour obturer même la fente émissive étroite sont prévus lorsque la source n'est pas en service (rotation, retrait de la perle à l'intérieur du blindage en plomb, etc.).

Le détecteur consiste en un compteur à scintillation robuste muni d'un cristal de NaI (T1) ou de germanate de bismuth.

Du fait que l'émission d'une source radioactive varie statistiquement pour une densité constante, le taux de comptage instantané varie également statistiquement et il est nécessaire d'établir la moyenne à intervalles réguliers pour connaître la valeur moyenne. La valeur moyenne est d'autant plus précise que l'intervalle est plus long. D'autre part, pour obtenir un nombre aussi grand que possible de lectures des variations de la densité, cet intervalle ne peut être trop long. Par conséquent, pour détecter de petites modifications de la densité, le taux de comptage moyen doit être établi avec précision. Ceci peut être réalisé à l'aide d'un micro-ordinateur moderne approprié et d'un programme convenable.

Le détecteur de profondeur indique la profondeur précise à laquelle le poisson contenant le densimètre fonctionne. Il donne une indication beaucoup plus fiable qu'une lecture de la longueur du câble au départ du treuil qui doit tenir compte du mou du câble pendant le remorquage. Néanmoins, la mesure du câble constitue un moyen d'urgence approprié donnant une confirmation approximative des lectures affichées par le détecteur de profondeur.

Le poisson peut contenir un dispositif pour évaluer ses oscillations en tangage et en lacet par rapport au bateau remorqueur. Un transpondeur avec source d'énergie incorporée peut donc être attaché au poisson. Sur le bateau hydrographique, un ou deux transducteurs sont montés de façon rigide et interrogent le transpondeur et note sa position. Au moyen d'un système de localisation double et de la mesure de profondeur provenant du détecteur de pression, les fluctuations de distance vers l'arrière et latéralement peuvent être calculées et enregistrées. Le transpondeur doit fonctionner avec une précision de 0,5 m.

Toutefois, l'expérience a montré qu'à la vitesse de remorquage du poisson, celui-ci reste bien dans l'axe du bateau remorqueur sans dévier latéralement. On peut donc évaluer sa position d'après la longueur du câble dévidé du treuil combinée avec la mesure de profondeur.

Le câble a une double fonction: la fonction mécanique de remorquer le poisson et de l'asservir au treuil intelligent et la fonction électrique d'établir la connexion entre le système détecteur et l'ordinateur à bord du bateau remorqueur afin de transmettre à cet ordinateur les données relevées par le poisson.

Du point de vue mécanique, le câble doit être résistant et flexible: résistant pour pouvoir remorquer le poisson à travers la boue et flexible pour être envidé puis dévidé à nouveau du tambour du treuil. Bien qu'un câble résistant soit nécessaire, son diamètre doit être aussi faible que possible parce que la tension et le recul du poisson par rapport au bateau remorqueur aux grandes vitesses de remorquage dépendent notablement de ce paramètre. Considérant un cas particulier, un câble nu d'un diamètre de 16 mm avec un poisson remorqué de 100 kg à 30 m de profondeur donne un recul d'environ 40 m à un rapport portance: traînée de 1,4:1 avec une force de traction de 1400 N à une vitesse de remorquage de 5 noeuds. Lors du passage dans la boue, cette force doit être multipliée par un facteur de 3 à 5. Si en plus on tient compte d'un facteur de sécurité, le câble devrait finalement résister à des tensions de travail de 15 kN.

Du point de vue de la fonction électrique du câble, il faut que celui-ci comprenne autant de conducteurs qu'il est nécessaire pour transmettre les données enregistrées par les détecteurs jusqu'à l'ordinateur sans augmenter inutilement le diamètre du câble.

Le treuil utilisé suivant l'invention est un treuil dit «intelligent» au contraire du treuil à commande manuelle d'usage plus ancien. Le fonctionnement du treuil intelligent, c'est-à-dire le mouvement d'envider et de dévider, est commandé par l'ordinateur. Cela permet une réaction beaucoup plus rapide et beaucoup plus précise du moteur du treuil en fonction des lectures du densimètre situé dans le poisson que celle que permettrait toute commande manuelle, ce qui rend le système autonome et économise un poste de travail. L'ordinateur peut faire en sorte que le poisson remorqué recherche un trajet de densité déterminée, par exemple 1, 2, et signale la variation de profondeur à laquelle cette densité existe ou recherche une profondeur déterminée au préalable et mesure et transmet ds variations de densité rencontrées. Le poisson peut aussi être amené à suivre un trajet onduleux entre deux horizons de densité présélectionnés. Dans ce cas, le treuil laisse descendre le poisson jusqu'au contour présélectionné. Lorsque celui-ci est atteint, le treuil inverse immédiatement le mouvement. En repassant au contour supérieur, le treuil inverse la direction et répète la manoeuvre. Cette technique permet d'obtenir un très grand nombre de points de croisement. Une vitesse relativement élevée de montée et de descente, par exemple jusqu'à 0,1 m par seconde, permet de faire deux lectures de profondeur de la couche critique de densité corisée (par exemple 1,2) par cycle d'ondulation, par exemple toutes les 8 secondes. Ce très grand nombre de lectures augmente beaucoup la précision du relevé de la profondeur navigable.

Le treuil peut être à double tambour et entraînement unique ou à deux tambour entraînés chacun indépendamment ou, de préférence, un tambour avec entraînement unique et une seule nappe de spires de câble. Ce dernier système est le moins onéreux, le plus léger et le plus simple. Les algorithmes de commande sont fort simples, le programme de commande est simple et, surtout en comparaison des deux autres systèmes, la fiabilité d'ensemble est meilleure.

Les parties principales du treuil sont le moteur, la boîte de vitesses et le tambour. Différents agencements sont possibles. Le moteur préféré est un servomoteur refroidi par ventilateur muni d'une protection contre la surchauffe et d'un frein de sécurité. La boîte de vitesses est à entraînement hélicoïdal à haute efficacité d'inversion de marche permettant le fonctionnement en mode de halage. Le système de transmission le plus simple et le plus fiable du moteur jusqu'à la boîte de vitesses est une courroie dentée qui ne rouille pas et ne doit pas être huilée comme une chaîne. Le tambour est de préférence parallèle au moteur, mais aligné avec la boîte de vitesses. Le tambour est de préférence d'un diamètre important permettant d'envider le câble en deux couches seulement. Ceci permet de monter un dispositif de mesure de la longueur dévidée avec une précision d'affichage d'à peu près 10 cm pour la couche supérieure. L'indication de la longueur de câble dévidé peut être affichée à l'écran. Ceci peut être réalisé par simple comptage du nombre de tours et fractions de tour du tambour. Il convient de prévoir un moyen manuel d'entraînement pour le dévidage ou la remontée d'urgence, de même que pour la mise en place du poisson et sa remontée. Un dispositif permettant de mesurer la traction exercée sur le câble est raccordé au moteur du treuil. Le signal de sortie est affiché à l'écran.

L'ordinateur à bord du bateau remorqueur collecte toutes les données reçues du densimètre, du détecteur de profondeur et du dispositif de positionnement du poisson et enregistre simultanément le temps et la position du bateau dans le port. La moyenne du signal de taux de comptage instantané du détecteur de densité est calculée, corrigée en fonction de l'affaiblissement de la source et convertie en lecture de densité. Cette fonction peut être effectuée par un microprocesseur distinct ou bien être programmée par l'ordinateur principal. Toutes les données collectées sont conservées dans la mémoire centrale, puis extraites et soumises au calcul et finalement affichées dans l'un ou l'autre appareil propre à réaliser un synthèse visible, par exemple un graphique. En fonction des résultats obtenus, l'ordinateur vérifie et commande le fonctionnement du treuil pour qu'il fasse monter ou descendre le poisson. Tous les résultats obtenus sont combinés et permettent de tracer une carte comprenant les régions qui ont déjà une profondeur de navigation suffisante et les régions qui doivent encore être draguées pour assurer la sécurité de la navigation.

L'invention est illustrée plus en détail par la description donnée ci-après d'une forme de réalisation préférée. Cette description est faite avec référence aux dessins annexés dans lesquels:

la Fig. 1 est une esquisse du système densimétrique remorqué faisant l'objet de l'invention;

la Fig. 2 est une vue latérale en perspective du poisson remorqué;

la Fig. 3 est une vue latérale en coupe du poisson remorqué (correspondant à la ligne III-III de la Fig. 4;

la Fig. 4 est une vue en coupe frontale du poisson remorqué suivant la ligne IV-IV de la Fig. 3;

la Fig. 5 est une vue en plan du dessous du poisson remorqué (sans l'enveloppe);

la Fig. 6 est un diagramme montrant les axes de portance et de traînée du poisson;

la Fig. 7 est un diagramme polaire des angles de remorquage;

la Fig. 8 est une vue en coupe du porte-source de la sonde à transmission avec son logement et son mécanisme d'actionnement;

la Fig. 9 est un diagramme temps-densité montrant le comptage instantané et la valeur moyenne de densité;

la Fig. 10 est une vue en plan du treuil;

la Fig. 11 est une vue latérale en élévation du treuil que représente la Fig. 10;

la Fig. 12 est un schéma de l'ordinateur et des appareils périphériques.

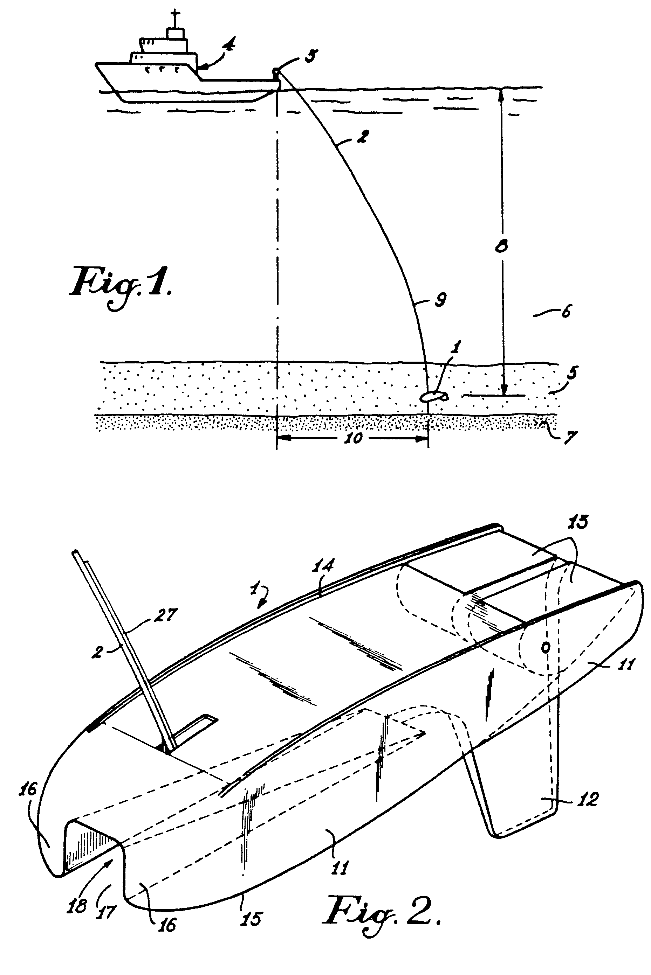

Comme le montre la Fig. 1, le système densimétrique autonome remorqué de l'invention comprend le poisson remorqué 1 avec son dispositif détecteur, le câble 2, le treuil 3 et l'ordinateur (non représenté) à bord du bateau remorqueur 4. Le poisson remorqué 1 traverse la couche de vase 5 sous l'eau de mer propre 6, mais au-dessus du lit consolidé 7 à une profondeur 8 avec un mou 9 et un recul 10.

L'élément central et le plus original du système densimétrique remorqué de l'invention est le poisson avec ses détecteurs. Comme déjà indiqué, on ne disposait d'aucune conception antérieure d'un poisson capable d'être remorqué dans de la vase marine d'une densité s'élevant jusqu'à 1,4. La nouvelle conception devait tenir compte des critères suivants: avoir un profil hydrodynamique avec équilibre de pression, éviter le roulis et le tangage, présenter un ventre creux par lequel la couche de boue peut s'écouler entre les deux organes de la sonde densimétrique. L e frottement en surface devait être réduit au minimum par suppression de la rugosité superficielle. Enfin, chose non moins importante, le poisson devait abriter les différents détecteurs, en particulier la sonde densimétrique, et les maintenir en position aussi horizontale que possible. Après des études poussées, un poisson remorqué tel que représenté aux Fig. 2 à 7 s'est révélé le plus approprié.

Comme le montrent les Fig. 2 à 5, ce poisson comprend deux flancs effilés ayant en section le profil d'une aile d'avion 11. L'extrémité arrière effilée de chacune des deux ailes 11 est élargie. Un aileron 12 vertical inversé tourné vers le bas est disposé au milieu, entre les extrémités effilées. Des deux côtés de l'aileron inversé 12 et au-dessus de celui-ci, sont disposés deux volets articulés 13 qui peuvent être orientés d'environ 25° vers le bas pour corriger l'attitude de remorquage du poisson. Le courant de boue à travers lequel le poisson est entraîné passe donc de part et d'autre de l'aileron inférieur 12. Les deux flancs verticaux 11 sont réunis et recouverts à la partie supérieure par une plaque rectangulaire 14 qui s'étend de la queue jusqu'au point de remorquage. Cette plaque se continue à l'avant du point de remorquage par une autre plaque 15 incurvée de manière à recouvrir le nez 16 et la partie inférieure du poisson. Toutefois, un orifice 17 subsiste du côté du ventre (côté inférieur) avec des plaques latérales et supérieures constituant un tunnel 18 en forme de U inversé, dans lequel la vase peut s'écouler lorsque le poisson est remorqué.

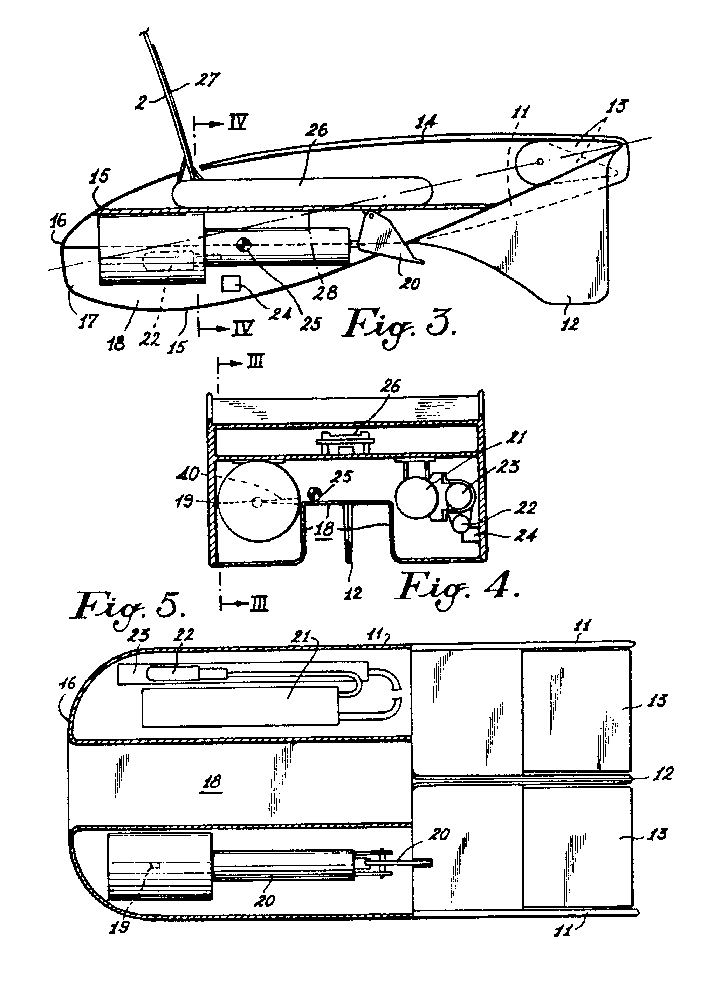

Toutes les parties de «peau» extérieures sont montées sur un châssis en forme de U inversé, comme on peut l'apercevoir clairement sur la vue en coupe frontale de la Fig. 4 (suivant la ligne IV-IV de la Fig. 3). Les différentes parties de l'assemblage détecteur sont également montées sur ce châssis. La branche verticale gauche du U inversé abrite la source 19 et son dispositif d'actionnement 20, tandis que la branche droite abrite le détecteur 21 de la jauge à transmission, de même que le détecteur de profondeur 22, la balise acoustique 23 et éventuellement un ballast 24 pour compenser le poids de l'épais blindage de plomb de la source 19 dans l'autre branche. Le centre de gravité 25 est représenté aussi. La branche horizontale supérieure unissant les deux branches verticales porte le bras de remorquage 26 auquel est fixé le câble de remorquage 2. Le tube à évent 27 du détecteur de profondeur 22 est attaché à la partie inférieure de ce câble 2.

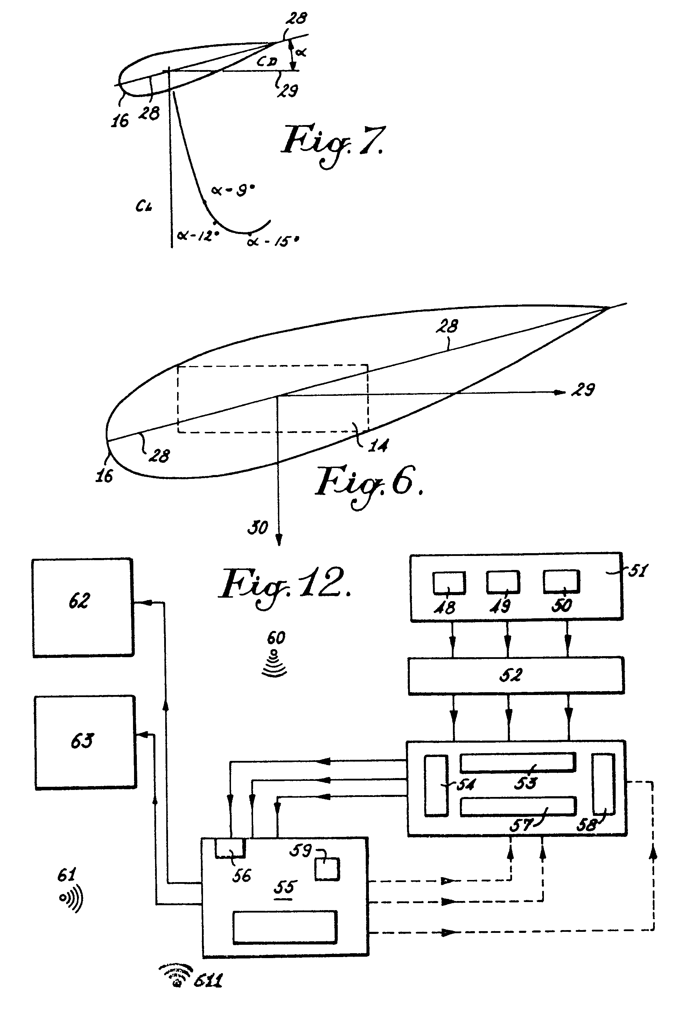

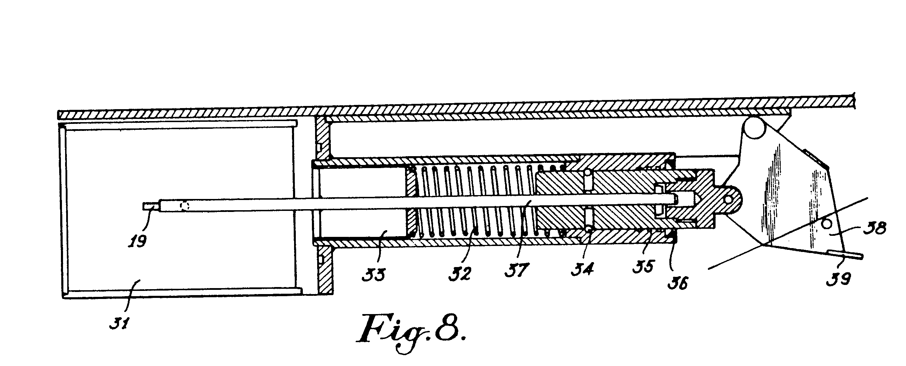

Lorsque le poisson est vu latéralement, tandis qu'il est remorqué (voir en particulier la Fig. 2 en perspective), il est apparent que le tunnel entre le porte-source 19 et le détecteur 21 du densimètre doit être maintenu aussi horizontal que possible en laissant le nez 16 en position de plongée. Ceci crée une force vers le bas par effet dynamique. Par conséquent, l'axe hydrodynamique principal 28 forme l'axe horizontal de traînée 29 un angle alpha de 9 à 15° et de préférence d'environ 12° (voir Fig. 6 et 7), l'axe de traînée 29 étant perpendiculaire à l'axe de portance 30. Ceci établit un bon rapport entre le coefficient de portance en section et le coefficient de traînée en section.

Les caractéristiques hydrodynamiques du poisson sont de nature à assurer une stabilité à environ 1 m près pour le maintien de la profondeur à des vitesses de 0,5 à 3 m par seconde en l'absence de système régulateur. La force de plongée du poisson, la traînée due à la pression et la traînée due à la pression et la traînée due au frottement sont calculées pour une performance optimale en terme d'un minimum de recul, de dérive de remorquage et de profondeur, pour une vitesse dans l'eau de 1 m par seconde. Ceci conduit à une stabilité du recul d'environ 1 m, à un déport de remorquage ou dérive latérale de moins de 10° par rapport à la ligne de centre du bateau, pour une vitesse dans l'eau de 1 m par seconde suivant la ligne de centre du bateau avec une longueur de câble dévidée de moins de 100 m. La stabilité longitudinale du poisson est telle que, lors de l'utilisation d'un système régulateur (par exemple par modification de la longueur dévidée), une ondulation d'une amplitude d'environ 0,5 m ou davantage peut être assurée à une vitesse dans l'eau de 1 m par seconde, avec une périodicité de moins de 2 secondes pour une vitesse de montée ou de descente de 1 m par seconde. Le poisson a, en outre, des caractéristiques antiroulis et antilacets. Le roulis n'excède pas environ 5° en amplitude ou a une périodicité inférieure à 5 secondes pour ces amplitudes. Le lacet n'excède pas une amplitude de 5° ou a une périodicité inférieure à 10 secondes à ces amplitudes. Il ne manifeste pas de modification de l'inclinaison de plus d'environ 2° sur chacun de trois axes mutuellement perpendiculaires.

Le poisson est susceptible d'être immergé à des profondeurs s'échelonnant de la surface à 30 m. Il est conçu pour résister à une pression hydrostatique de 1000 kN par m². Il résiste sans dégâts aux conditions expérimentales suivantes:

— vibrations d'une amplitude de 0,4 mm dans l'intervalle de fréquence de 7 Hz à 30 Hz et diminuant linéairement de 0,4 mm jusqu'à 0,05 mm dans l'intervalle de fréquence de 30 Hz à 200 Hz en fonctionnement normal, y compris les manipulations sur le pont;

— choc de 294 m par seconde et par seconde (à peu près 30 gN) pendant une durée de 18 millisecondes en fonctionnement normal, y compris les manipulations sur le pont;

— température pendant le stockage de −40°C à +80°C et pendant le fonctionnement de 0°C à +25°C.

Une particularité très importante du poisson est qu'il est capable de fonctionner à des densités de fluide s'élevant jusqu'à 1,4. Ceci n'est obtenu avec aucun appareil de sondage déjà connu fonctionnant dans de la vase marine.

Le poisson peut aussi être gréé en attitude verticale, par rapport à son axe horizontal normal, en vue d'une étude du profil stationnaire profondeur verticale/densité. La vitesse verticale sous tension nulle du câble de suspension peut atteindre 0,2 m par seconde. Pour une exploitation verticale, le poisson est conçu pour être suspendu par sa queue.

La sonde à transmission nucléaire préférée est un densimètre fabriqué par la Société Berthold à Wildbad, RFA. Cette sonde comprend par construction la source, le détecteur et un appareil d'évaluation par microprocesseur.

La source est une perle en céramique encapsulée double au [137]Cs d'une demi-vie de 30 ans. L'affaiblissement du rayonnement dû à la baisse de l'activité est corrigé quotidiennement par le programme de l'appareil d'évaluation. Celui-ci comprend une pile incorporée qui poursuit la correction et conserve les autres données en mémoire dans le cas d'une panne d'alimentation électrique.

La Fig. 8 est une vue en coupe de la source radioactive avec son logement à une échelle plus grande. Lorsqu'elle n'est pas en service, la source reste abritée dans le porte-source 31 protégé par le blindage de plomb et y est maintenue par le ressort de rentrée 32 de sécurité. Un bloc de plomb 33 masque l'entrée du porte-source. L'étanchéité du piston 37 à l'égard de l'eau est garantie par une détente à billes à quatre positions 34, un double joint torique 35 et une manchette d'étanchéité 36. Le piston 37 porte la source à l'une de ses extrémités à l'intérieur du porte-source et est fixé à l'autre extrémité à un organe d'actionnement 38 par une came 39.

Un cadenas est prévu pour empêcher que la source soit exposée par inadvertance ou fausse manoeuvre. Pour le service, le cadenas est retiré et l'organe d'actionnement est refoulé à la main pour venir au ras de l'enveloppe extérieure. Dans cette position, le piston est verrouillé dans l'arrêt à sa position supérieure. Lorsque la source est ainsi exposée, un signal audible est perçu dans la timonerie aussi longtemps que le poisson est à l'air. L'alarme est actionnée par la console de commande du densimètre et est interrompue lorsque le signal se trouve dans le domaine de fonctionnement normal dans l'eau, par exemple à une densité de 1,0 - 2,0.

En service, l'organe d'actionnement 38 refoule le piston 37 et la source 19 vers l'extérieur, de manière que celle-ci vienne en face de la fente étroite 40 prévue pour la transmission vers le détecteur à travers la vase qui s'écoule. Ce dispositif de sécurité est nouveau et a été conçu spécialement aux fins de la présente invention.

Comme il ressort de la vue en coupe de la Fig. 4, suivant la ligne IV-IV de la Fig. 3, la source 19 est montée dans une branche du U inversé, tandis que le détecteur 21 est monté dans l'autre branche. La distance entre les branches portant la source et le détecteur est d'à peu près 140 mm. Comme déjà indiqué, en service, la source est en face de la fente 40 et émet son rayonnement en direction du détecteur à travers la vase qui s'écoule. Les rayons gamma sont partiellement absorbés par la vase en proportion de sa densité. Le compteur à scintillations robuste du détecteur, comprenant un cristal de NaI (T1), mesure par comptage les rayons non absorbés et transmet la lecture à l'appareil de commande à bord du bateau qui transforme directement ce signal en une lecture de densité.

Le microprocesseur Berthold tient compte non seulement de la correction due à l'affaiblissement de la source et transforme le signal de taux de comptage reçu du détecteur en une mesure de densité et ce à vitesse fort élevée, mais de plus il calcule la moyenne du taux de comptage intantané. Ceci est fort important dans la présente application de la sonde à transmission et constitue une particularité spécifique qui n'a encore jamais été exploitée dans ce domaine de recherches.

On cherche à déterminer avec précision à quel moment le poisson traverse une couche de densité spécifiée et donc son altitude. Si on considère une situation où la densité de la boue fluide augmente régulièrement avec la profondeur, le passage de 1,10 à 1,30 peut se faire sur une distance de 1 ou 2m; la densité ne change que lentement avec la hauteur, à savoir de 0,10 par m.

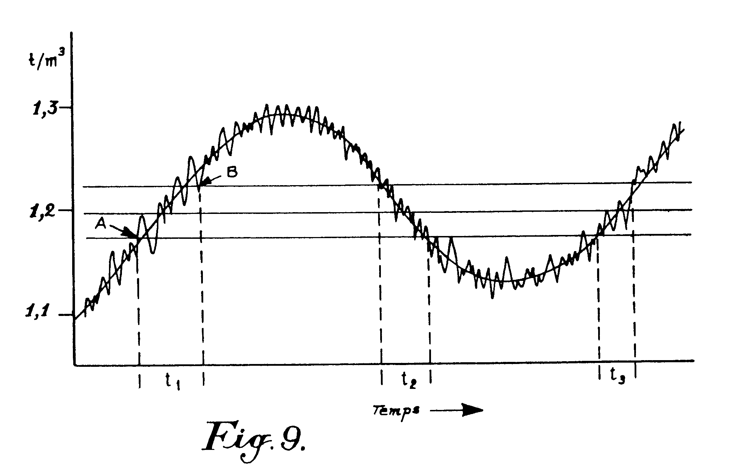

Le poisson est amené à plonger et remonter dans cette couche de boue fluide et, si on observe uniquement le signal de densité, la densité moyenne in situ en fonction du temps peut être représentée à la Fig. 9 par une courbe lisse. La question reste de savoir comment arriver à une telle courbe puisqu'en fait le signal de sortie du compteur en temps réel est la courbe fluctuante qui épouse la courbe de densité moyenne.

La Fig. 9 est un exemple de diagramme dans lequel on désire identifier l'altitude du contour à 1,20. Les deux lignes B au-dessus et A au-dessous de la ligne à 1,20 indiquent les limites de précision du transducteur (0,025). Ceci identifie les moments auxquels le taux de comptage atteint des valeurs qui indiquent 1,20. Comme on peut le voir, cette situation persiste pendant un temps fini t1, t2, t3 et n'est pas instantanée. Ce diagramme montre aussi que la valeur instantanée de la densité pourrait suggérer que la densité est de 1,20 avant que le comptage moyen atteigne cette valeur (A) et après qu'il s'est écarté de la valeur (B).

Par conséquent, dans les périodes t1, t2, t3 à la Fig. 9, les taux de comptage instantanés indiquent une densité de 1,20 ±0,025.

Si cette situation persiste pendant une ou deux secondes, elle pourrait représenter un changement de hauteur du poisson de 25 à 50 cm. La question est alors de savoir où est le contour de 1,20 dans cette bande. Par conséquent, on a établi un procédé qui permet de calculer la moyenne du signal pour diminuer la largeur de t1, t2, t3, mais sans diminuer le temps de réponse du système.

Le signal entrant du densimètre est converti en moyenne sur certains intervalles de temps et les tendances du signal moyen en sont déduites. Le signal entrant est comparé à ces tendances et en mode de prévision partiel, les changements des taux de comptage moyens sont détectés avec une réponse très rapide. Ceci constitue une particularité spécifique et offre une nouvelle commodité que n'a aucun autre système analogue.

L'optimalisation du traitement du signal dépend des fluctuations et aussi du signal moyen. En particulier, elle dépend du changement moyen du taux de comptage qui doit être distingué.

Les détecteurs au NaI et au germanate de bismuth avec une source de 5 mCi ont été essayés. Un changement du taux de comptage de ± 57.500 coups par seconde pour la résolution spécifiée de ± 0,025 a été atteint. Ceci constitue une bonne base pour un calcul rapide parce que le taux de comptage est élevé. En fait, en comparaison des autres jauges à transmission contenant une source de 3 mCi de $^{133}$Ba, pour une augmentation de puissance de la source de 1,67, on a réalisé une augmentation du taux de comptage d'à peu près 600.

Le détecteur de profondeur est un détecteur PTX 110/W fabriqué par la Société DRUCK. Le corps détecteur 22 et la balise acoustique 23 sont montés à côté du détecteur 21. Le détecteur de pression fonctionne par enregistrement de la pression hydrostatique de l'eau (à savoir la profondeur) agissant sur un diaphragme en acier inoxydable fixé sur une jauge de contrainte intégrée en silicium. La compression de la jauge produit une modification du courant de sortie (de 4 à 20 mA) qui est étalonnée en fonction de la profondeur. Le tube à évent 27 est raccordé à l'orifice de pression et sert à maintenir la boue à l'écart de l'orifice et aussi à protéger la jauge contre les erreurs qui pourraient résulter d'une surpression due à des bulles dans la boue.

Ce modèle offre l'avantage d'être simple, robuste et submersible et de ne pas exiger le carénage immergé distinct.

Il est important de localiser avec précision les lectures de la profondeur en fonction de la densité relevées par le poisson dans le port. Par conséquent, les oscillations latérales vers l'avant et l'arrière du poisson doivent être évaluées par rapport au bateau remorqueur et simultanément la position de ce dernier dans le port doit être déterminée. Pour la localisation du poisson, un transpondeur à source incorporée peut être fixé à l'intérieur du poisson, suivant la longueur du boîtier du détecteur. A bord du bateau remorqueur, deux transducteurs sont montés rigidement sous la ligne d'eau à la proue et à la poupe du bateau. Ceux-ci interrogent le transpondeur et notent sa position. Au moyen d'un système à double limite, les fluctuations de distance vers l'arrière et latéralement sont calculées et notées. Le transpondeur fonctionne avec une précision de 0,5 m. Etant donné que la déviation est minime à la vitesse de remorquage, la localisation du poisson peut se faire à partir de la mesure de la longueur de câble dévidée par le treuil et de la mesure de profondeur.

La position du bateau remorqueur lui-même peut être déterminée, par exemple, par l'intersection d'au moins trois faisceaux d'ondes hertziennes émis par des stations situées à terre.

Considérant ce qui a été dit à propos du câble de remorquage, un câble satisfaisant aux spécifications suivantes a été réalisé: une âme centrale avec deux conducteurs tressés blindés d'un diamètre de 0,5 mm pour le détecteur de pression, entourée de sept conducteurs d'un diamètre de 0,5 mm avec un blindage général et une gaine en polyuréthanne pour la sonde de transmission, outre deux couches d'armature à équilibre de torsion avec une guipure finale en polyuréthanne. Le câble a un diamètre d'ensemble de 16 mm et un rayon de flexion minimum de 104 mm, ce qui permet une grande souplesse dans la conception du tambour du treuil et de sa boîte de vitesses. La charge de rupture du câble est nominalement de 5.000 kg, ce qui permet une tension de travail maximale de 1.500 kg. Les connecteurs immergés sont attachés et moulés à l'extrémité du câble. La longueur dévidée du câble en fonction de la profondeur n'est pas linéaire, mais en approximation la multiplication de la profondeur souhaitée par le facteur 1,25 donne la longueur dévidée. Ainsi, une profondeur de 30 m exige une longueur de câble dévidée de 38 m. Cette longueur de câble peut être fixée. Toutefois, pour un dévidage en cas d'urgence, par exemple si le poisson se coince, la longueur de câble est de 150 m.

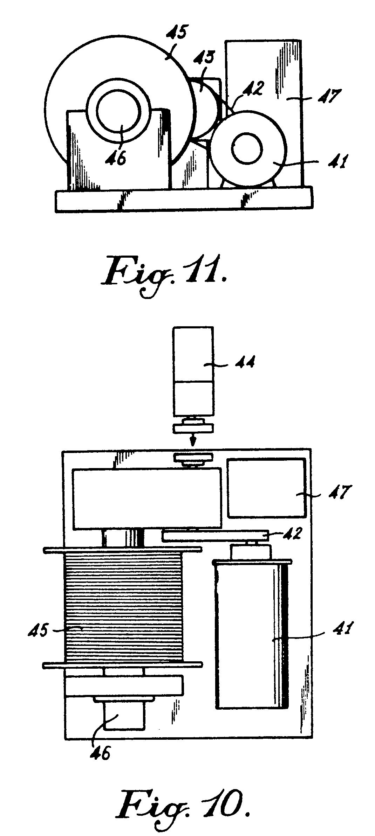

Comme le montrent les Fig. 10 et 11, le treuil comprend un moteur à régulateur de vitesse et frein TEFV 41, une courroie dentée de transmission unique 42, une boîte de vitesses 43, un moteur auxiliaire 44, un tambour unique 45, un mécanisme scellé à bagues 46 et un pupitre de commande 47. Pour la clarté, la cage du tambour, le cache-courroie et les points d'ancrage au pont ne sont pas représentés aux figures. Un capot protège le treuil en cas d'inondation du pont de service par mauvais temps.

Le moteur principal est un servomoteur 41 complètement fermé à courant continu TEFV à alimentation constante de 7,5 kW refroidi par ventilateur et à variation continue de vitesse de 0 à 3.000 tours par minute, alimenté par une source à thyristor à quatre quadrants. Le moteur est muni d'une protection contre la surchauffe et d'un frein de sécurité à fermeture par ressort et dégagement électrique intégral. Le frein est actionné en service normal par une alimentation de 24 V en courant continu prélevée sur l'alimentation principale. Pour une manoeuvre manuelle d'urgence, une douille permet d'utiliser du courant continu de 24 V d'une batterie d'accumulateur, afin de dégager le frein. Le moteur et le frein sont scellés. Outre le frein de sécurité, le système de commande et régulation permet d'utiliser le freinage à régénération dynamique avec restitution complète d'énergie du moteur. Par conséquent, en fonctionnement normal, le frein de sécurité n'est utilisé qu'en temps de repos.

La boîte de vitesses 43 est une boîte à vis sans fin à haute efficacité d'inversion du sens de marche pour permettre le fonctionnement en mode de halage. Elle est munie d'un arbre prolongé à grande vitesse permettant de remonter le poisson à la main en cas de panne d'alimentation électrique ou d'une autre urgence à l'aide du moteur 44 actionné par l'accumulateur auxiliaire de 24 V.

La transmission du moteur principal à la boîte de vitesse se fait par la courroie dentée 42 à flottement nul.

Le tambour 45 a un diamètre important qui permet d'envider le câble en deux couches. Un appareil de mesure du dévidement avec possibilité d'affichage à l'écran de l'ordinateur de commande indique la longueur de câble par simple comptage du nombre de tours et fractions de tour du tambour. Ce résultat comfirme en première approximation les lectures du détecteur de profondeur et constitue une information d'urgence à propos de la distance entre le bateau et le poisson.

La commande des modes de fonctionnement est assurée par un ordinateur Hewlett Packard avec algorithmes de commande écrits en HPL. Le système de commande prévoit des fluctuations de longueur de câble réglables par programme, qui sont déterminées par une consigne de profondeur ou de densité. Les fluctuations d'extrémité de câble ne peuvent être franchies qu'en mode manuel. Le treuil est muni aussi d'une commande à distance pendante sur 25m de câble. La commande pendante comprend des modes rapides et lents à la montée et à la descente préréglables dans le pupitre de commande, un arrêt d'urgence et un interrupteur ordinateur/commande pendante. Le choix de la commande pendante déconnecte l'ordinateur.

Le treuil offre la possibilité de travailler en continu à des vitesses, rapportées au poisson, s'élevant jusqu'à 0,1 m par seconde avec une charge utile (poids du câble et traînée, plus poids du poisson et traînée) de 1.000 kg et une stabilité en vitesse meilleure que 5%. Dans le cas le plus défavorable, à savoir un câble d'un diamètre de 16 mm, une vitesse de remorquage de 6 noeuds et une force de descente de 1.000 N seulement, une vitesse maximale à la montée et à la descente de 0,4 m par seconde est prévue pour pouvoir réaliser une ondulation en amplitude du poisson de 1 m avec une période de 8 secondes.

Le treuil offre une possibilité en urgence de remonter une charge de 1.000 kg à une vitesse du câble de 0,5 m par seconde en régime continu ou de 1.500 kg à une vitesse du câble de 0,5 m par seconde pendant une durée atteignant 15 minutes.

Les vitesses de travail normales sont variables de façon continue de 0 jusqu'à 0,2 m par seconde et peuvent être sélectionnées par l'ordinateur de commande. D'autre part, la vitesse de repêchage d'urgence de 0,5 m par seconde peut être sélectionnée par un interrupteur distinct en deux endroits a) à l'intervention d'une touche prévue sur l'ordinateur de commande et b) par la sélection de l'interrupteur «montée rapide» sur la commande pendante à distance.

La vitesse d'urgence permet un dévidage rapide en cas d'obstruction ou une remontée rapide à l'approche d'une eau peu profonde.

La compensation de remontée du treuil due aux vagues est effectuée en tenant compte de l'information de profondeur provenant du poisson. Le treuil répond de manière à conserver la consigne de profondeur existante. Par exemple, si le poisson se trouve dans la partie ascendante du profil et si le bateau remorqueur monte plus rapidement, le treuil dévide du câble pour maintenir le profil de profondeur du poisson.

La Fig. 12 est un schéma d'agencement de l'ordinateur et de ses organes périphériques. Les lignes en traits continus sont les lignes de données et les lignes en traits interrompus sont les lignes de commande. Les signaux provenant du détecteur 48 de la sonde à transmission nucléaire, du détecteur de profondeur 49 et du transpondeur 50 contenus dans le poisson 51 sont transmis par le câble de signalisation et de remorquage 52 au treuil 53 et par l'intermédiaire du connecteur à bagues tournantes 54 à l'ordinateur 55. Les signaux de taux de comptage provenant du détecteur 48 sont d'abord calculés en moyenne sur un certain intervalle de temps, corrigés pour l'affaiblissement quotidien de la source gamma et convertis en lectures de densité par l'unité de calcul 56 prévue par le fabricant de la sonde. Il est évident qu'à l'aide d'un programme approprié, cette opération peut être réalisée aussi par le même ordinateur central 55.

En fonction du choix qui a été fait (le poisson circulant à une profondeur ou densité choisie au préalable ou suivant un trajet onduleux dans un intervalle de densité au-dessus et au-dessous de la valeur critique, comme 1,2), l'ordinateur commande l'unité motrice et régulatrice 57 du treuil de faire descendre ou remonter le poisson. Cette commande prend en compte la compensation du treuil. Un dépassement d'urgence permet un dévidage rapide en cas d'obstruction ou une remontée rapide à l'approche d'une eau peu profonde. Dans ce cas, l'ordinateur (ou une commande manuelle sur le panneau ou la commande pendante) actionne l'interrupteur principal du treuil 53. Le moteur auxiliaire 58 n'est utilisé qu'en cas de panne électrique et uniquement pour faire remonter le poisson.

L'ordinateur enregistre, en outre, le temps réel au départ d'une horloge incorporée 59, de même que la position du remorqueur dans le port en enregistrant, par exemple, au moins trois longueurs d'ondes émises en des points différents (60, 61 et 611) des quais du port. Cette position est corrigée au moyen de la position relative du poisson par rapport au remorqueur telle qu'elle est déduite des signaux 50 du transducteur/transpondeur, de sorte que les lectures du poisson sont repérées de manière ininterrompue dans le temps et l'espace.

Tous les signaux, après lecture de la mémoire et calcul, peuvent être affichés sur un ou plusieurs périphériques d'affichage visuel opérant la synthèse: un écran en couleur 62, une table 63 traçant des graphiques xyy ou xxt ou tout autre moyen approprié.

Il va de soi que les différents éléments constitutifs du système peuvent avoir une configuration différente dans sortir du cadre de l'invention et ainsi le poisson peut comprendre des ailerons inférieurs ou inversés 12 de part et d'autre en prolongation des flancs verticaux 11 ou tout autre système déflecteur lui conférant l'attitude appropriée en immersion.

En comparaison des systèmes de mesure de densité marine déjà connus, le système de l'invention offre l'avantage d'un fonctionnement plus rapide et plus précis et celui de pouvoir fonctionner dans de la vase de plus haute densité. Il peut fonctionner pour des vitesses du remorqueur de 2 noeuds et davantage. Il synthétise les différentes lectures et surveille adéquatement les paramètres utiles. Il constitue le premier système complet qui soit entièrement autonome.

**Revendications**

1. Système densimétrique remorqué pour la mesure continue de la densité en fonction de la profondeur de la vase marine comportant

— un poisson remorqué par un bateau remorqueur et équipé d'un moyen de mesure de la densité de la vase marine traversée et d'un détecteur de profondeur;

— un câble permettant de remorquer le poisson et de transmettre des données;

— un treuil pour manoeuvrer le poisson remorqué, en fonction des données qu'il a transmises;

— des moyens pour déterminer la position du bateau remorqueur par rapport à des points fixes sur terre ferme; caractérisé en ce que:

— le dit système densimétrique remorqué fonctionne de manière autonome, et comporte des moyens pour localiser le poisson (1) remorqué par rapport au bateau remorqueur (4);

— le poisson (1) remorqué est à profil hydrodynamique équilibré en pression et conçu pour permettre son passage dans une vase marine (5) d'une densité s'élevant jusqu'à 1,4 à une vitesse d'au moins deux noeuds;

— le moyen de mesure de la densité de la vase (5) traversée est une sonde à transmission nucléaire à grande vitesse comportant une source radioactive (19) et un détecteur (21) et munie de blindages de sécurité contre le rayonnement;

— le treuil (3) est commandé par un ordinateur (55) en fonction des données transmises, le dit ordinateur (55) étant installé à bord du bateau remorqueur (4) pour collecter toutes les données transmises par le poisson (1) de même que pour enregistrer le temps et la position du bateau remorqueur (4) dans le port, établir par intervalles réguliers une moyenne des taux de comptage instantanés du détecteur (21) et la convertir en une lecture de densité, conserver toutes les données dans sa mémoire centrale, rassembler et calculer toutes les relations mutuelles et, en réponse aux résultats obtenus et en fonction d'un programme présélectionné, régler et commander le fonctionnement du treuil (3) pour qu'il fasse monter ou descendre le poisson (1) remorqué pour rechercher une profondeur ou une densité présélectionnée ou lui fasse suivre un trajet onduleux dans un contour de densité présélectionné, et afficher la synthèse des lectures à l'aide d'un dispositif d'affichage visuel (62, 63).

2. Système densimétrique remorqué suivant la revendication 1, caractérisé en ce que le poisson (1) remorqué présente une section frontale en forme de tunnel (18) en U inversé et une section latérale en forme d'aile d'avion (11) et présente en position médiane à la partie terminale un aileron (12) vertical inversé tourné vers le bas avec deux volets articulés (13) horizontaux de part et d'autre et au-dessus de l'aileron (12) inversé.

3. Système densimétrique remorqué suivant l'une quelconque des revendications 1 et 2, caractérisé en ce que la sonde à transmission nucléaire (19, 21) du poisson (1) comporte un système de blindage de sécurité contre le rayonnement, qui comporte un piston (37) qui porte la source radioactive (19) et la maintient à l'intérieur d'un logement blindé en plomb au moyen d'un ressort (32) de rentrée de sécurité lorsque l'appareil ne fonctionne pas, le piston (37) étant, en service, repoussé vers l'extérieur par un organe d'actionnement (38) à came (39) afin que la source (19) vienne en face d'une fente (40) étroite en face du détecteur (21) de la sonde à transmission nucléaire (19, 21).

4. Système densimétrique remorqué suivant l'une quelconque des revendications 1 à 3, caractérisé en ce que le treuil (3) est muni d'un moteur auxiliaire (44) pour la remontée du matériel dans le cas d'une panne d'alimentation électrique à bord du bateau remorqueur (4).

5. Système densimétrique remorqué suivant l'une quelconque des revendications 1 à 4, caractérisé en ce que le dispositif d'affichage visuel de l'ordinateur (55) est une table traçante (63).

6. Système densimétrique remorqué suivant l'une quelconque des revendications 1 à 5, caractérisé en ce que les moyens pour localiser le poisson (1) remorqué par rapport au bateau remorqueur (4) consistent en un transpondeur (50) logé dans le poisson (1) et au moins un transducteur à bord du bateau remorqueur (4).

7. Système densimétrique remorqué suivant l'une quelconque des revendications 1 à 5, caractérisé en ce que les moyens pour localiser le poisson (1) remorqué par rapport au bateau remorqueur (4) consistent en des moyens de mesure de la longueur du câble (2) dévidé du treuil (3), en un moyen de mesure de la profondeur du poisson (1) constitué par le détecteur de profondeur (22) logé dans le poisson (1) et en des moyens de calcul de la position du poisson (1) à partir des dites mesures.

8. Système densimétrique remorqué suivant l'une quelconque des revendications précédentes, caractérisé en ce que les moyens pour déterminer la position du bateau remorqueur (4) par rapport à des points fixes sur terre ferme (60, 61, 611) consistent en au moins trois émetteurs de signaux de repérage et au moins un capteur de ces signaux à bord du bateau remorqueur (4).

9. Procédé pour la détermination de la profondeur navigable, dans lequel, au moyen d'un bateau remorqueur et d'un câble approprié, on entraîne un poisson dans des couches de vase marine et on détermine de manière continue et simultanée: (a) la densité et la profondeur de la couche de vase traversée par des moyens logés dans le poisson; (b) la position du poisson par rapport à des points fixes sur terre ferme, caractérisé en ce que:
— on utilise un poisson (1) équilibré en pression et conçu pour permettre son passage dans une vase marine (5) d'une densité s'élevant jusqu'à 1,4 à une vitesse d'au moins deux noeuds;
— on détermine de manière continue la densité de la couche de vase (5) au moyen d'une sonde à transmission nucléaire (19, 21) logée dans le poisson (1) et ce en mesurant l'atténuation du taux de comptage instantané des rayons gamma émis par la source (19) et captés par le détecteur (21), en établissant par intervalles réguliers la moyenne de ces signaux, avec une correction pour l'affaiblissement quotidien de la source gamma et en convertissant la moyenne corrigée du taux de comptage en une lecture de densité;
— en réponse aux données provenant de la mesure de densité et/ou de profondeur, et au moyen d'un treuil (3) commandé par ordinateur, on fait rechercher par le poisson une profondeur ou une densité présélectionnée ou on lui fait suivre un trajet onduleux de manière continue au-dessus et au-dessous d'une couche de densité critique déterminant la profondeur navigable;
— on enregistre toutes les données collectées au moyen d'un ordinateur (55), on conserve les informations dans sa mémoire centrale, on recherche et on analyse les informations et on les convertit en un système d'affichage visuel (62, 63) montrant la profondeur navigable.

10. Procédé suivant la revendication 9, caractérisé en ce que le dispositif d'affichage visuel est une table traçante (63).

11. Procédé suivant l'une quelconque des revendications 9 et 10, caractérisé en ce que la position du poisson (1) par rapport à des points fixes sur terre ferme (60, 61, 611) est déterminée par localisation du poisson (1) par rapport au bateau remorqueur (4) à l'aide d'un transpondeur (50) logé dans le poisson (1) et d'au moins un transducteur à bord du bateau remorqueur (4) et par localisation du bateau remorqueur (4) lui-même par rapport aux points fixes sur terre ferme (60, 61, 611) d'où sont émis des signaux de repérage.

12. Procédé suivant l'une quelconque des revendications 9 et 10, caractérisé en ce que la position du poisson (1) par rapport à des points fixes sur terre ferme (60, 61, 611) est déterminée par localisation du poisson (1) par rapport au bateau remorqueur (4) par un calcul combinant la mesure de la longueur du câble (2) dévidé du treuil (3) et la mesure de la profondeur du poisson (1) donnée par le détecteur de profondeur (22) logé dans le poisson (1) et par localisation du bateau remorqueur lui-même par rapport aux points fixes sur terre ferme (60, 61, 611) d'où sont émis des signaux de repérage.

**Patentansprüche**

1. Nachgezogenes Dichtemeßgerät zum kontinuierlichen Messen der Dichte als Funktion der Tiefe des Meeresschlammes, mit:
— einem Fisch, der von einem Schleppschiff nachgezogen wird und der eine Einrichtung zum Messen der Dichte des durchquerten Meeresschlammes und einen Tiefendetektor aufweist;
— einem Kabel zum Nachziehen des Fisches und zum Übermitteln der Daten;
— einer Winde zur Steuerung des nachgezogenen Fisches in Abhängigkeit von den von ihm übermittelten Daten;
— Einrichtungen zur Positionsbestimmung des Schleppschiffes bezüglich Fixpunkten auf dem Festland; dadurch gekennzeichnet, daß:
— das nachgezogene Dichtemeßgerät unabhängig funktioniert und Einrichtungen zum Lokalisieren des nachgezogenen Fisches (1) bezüglich des Schleppschiffes (4) aufweist;
— der nachgezogene Fisch (1) hydrodynamische Form und Druckausgleich aufweist und derart aufgebaut ist, daß er Meeresschlamm (5) mit einer Dichte von bis zu 1,4 mit einer Geschwindigkeit von mindestens zwei Knoten durchqueren kann;
— die Einrichtung zum Messen der Dichte des durchquerten Schlammes (5) eine Kernstrahlungssonde mit hoher Geschwindigkeit ist, die eine radioaktive Quelle (19) und einen Detektor (21) aufweist und mit Sicherheitsabschirmungen gegen die Strahlung ausgestattet ist;
— die Winde (3) in Abhängigkeit von den übermittelten Daten von einem Rechner (55) gesteuert ist, wobei der Rechner (55) an Bord des Schleppschiffes (4) installiert ist zum Erfassen aller von dem Fisch übermittelten Daten und zum Aufzeichnen der Zeit und der Position des Schleppschiffes (4) im Hafen, zum Erstellen eines Durchschnittswertes der vom Detektor (21) eintretenden Impulsrate in regelmäßigen Zeitabständen und zum Umwandeln dieses Durchschnittswertes in eine Dichtemessung, zum Aufbewahren aller Daten in seinem Hauptspeicher, zum Sammeln und Berechnen aller wechselseitigen Beziehungen und zum Regeln und Steuern des Betriebes der Winde (3) als Antwort auf die erhaltenen Ergebnisse und abhängig von einem zuvor gewählten Programm, so daß die Winde (3) den nachgezogenen Fisch (1) hochzieht oder absenkt, um eine zuvor gewählte Tiefe oder Dichte zu untersuchen oder um ihn in einer Linie mit vorgegebener Dichte einen gekrümmten Weg verfolgen zu lassen, und zum Darstellen des berechneten Ergebnisses der Messungen mit Hilfe einer Sichtanzeigevorrichtung (62, 63).

2. Nachgezogenes Dichtmeßgerät nach Anspruch 1, dadurch gekennzeichnet, daß der nachgezogene Fisch (1) einen stirnseitigen Querschnitt in Form eines umgekehrten U-Tunnels (18) und einen seitlichen Querschnitt in Form eines Flugzeugflügels (11) aufweist, und in der Mitte des Endstücks ein senkrechtes Ruder (12) trägt, das umgekehrt gegen die Unterseite gedreht ist, mit zwei beweglichen Klappen (13), die horizontal auf beiden Seiten und über dem umgekehrten Ruder (12) angeordnet sind.

3. Nachgezogenes Dichtmeßgerät nach einem der Ansprüche 1 und 2, dadurch gekennzeichnet, daß die Kernstrahlungssonde (19, 21) des Fisches (1) ein System von Sicherheitsabschirmungen gegen die Strahlung enthält, das einen Kolben (37) aufweist, der die radioaktive Quelle (19) trägt, und sie mittels einer Sicherheitsrückschlagsfeder (32) im Innern eines mit Blei gepanzerten Gehäuses hält, wenn der Apparat nicht funktioniert, wobei der Kolben (37) im Betrieb durch eine Antriebsvorrichtung (38) mit Nocken (39) nach außen gedrückt wird, damit die Quelle (19) vor einen engen Spalt (40) gegenüber dem Detektor (21) der Kernstrahlungssonde (19, 21) zum Liegen kommt.

4. Nachgezogenes Dichtemeßgerät nach einem der Ansprüche 1 bis 3, dadurch gekennzeichnet, daß die Winde (3) mit einem Hilfsmotor (44) für das Heben von Material im Falle einer Panne in der elektrischen Versorgung an Bord des Schleppschiffes (4) ausgestattet ist.

5. Nachgezogenes Dichtermeßgerät nach einem der Ansprüche 1 bis 4, dadurch gekennzeichnet, daß die Sichtanzeigevorrichtung des Rechners (55) ein Graphiktisch (63) ist.

6. Nachgezogenes Dichtemeßgerät nach einem der Ansprüche 1 bis 5, dadurch gekennzeichnet, daß die Einrichtungen zum Lokalisieren des nachgezogenen Fisches (1) bezüglich des Schleppschiffes (4) aus einem im Fisch (1) angeordneten Transponder (50) und mindestens einem Signalumformer an Bord des Schleppschiffes (4) bestehen.

7. Nachgezogenes Dichtemeßgerät nach einem der Ansprüche 1 bis 5, dadurch gekennzeichnet, daß die Einrichtungen zum Lokalisieren des nachgezogenen Fisches (1) bezüglich des Schleppschiffes (4) aus Einrichtungen zur Längenmessung des von der Winde (3) abgewickelten Kabels (2), aus einer durch den im Fisch (1) angebrachten Tiefendetektor (22) gebildeten Einrichtung zum Messen der Tiefe des Fisches, und aus Einrichtungen zur Positionsberechnung des Fisches (1) anhand dieser Messungen bestehen.

8. Nachgezogenes Dichtemeßgerät nach einem der vorhergehenden Ansprüche, dadurch gekennzeichnet, daß die Einrichtungen zur Positionsbestimmung des Schleppschiffes (4) bezüglich Fixpunkten auf dem Festland (60, 61, 611) aus mindestens drei Ortungssignalgebern und mindestens einem Signalaufnehmer an Bord des Schleppschiffes (4) bestehen.

9. Verfahren zur Bestimmung der schiffbaren Tiefe, bei dem man mittels eines Schleppschiffes und eines geeigneten Kabels einen Fisch in Schichten von Meeresschlamm hinterherzieht, und man stetig und gleichzeitig bestimmt: (a) die Dichte und die Tiefe der durchquerten Schlammschicht durch im Fisch angebrachte Einrichtungen; (b) die Position des Fisches bezüglich Fixpunkten auf dem Festland, dadurch gekennzeichnet, daß:

— man einen Fisch (1) mit Druckausgleich verwendet, der derart aufgebaut ist, daß er Meeresschlamm (5) mit einer Dichte von bis zu 1,4 mit einer Geschwindigkeit von mindestens zwei Knoten durchqueren kann;

— man kontinuierlich die Dichte des Meeresschlammes (5) bestimmt mittels einer im Fisch (1) angeordneten Kernstrahlungssonde (19, 21), wobei man die Schwächung der eintretenden Impulsrate der Gammastrahlen mißt, die von der Quelle (19) gesendet und vom Detektor (21) aufgenommen werden, in regelmäßigen Zeitabständen den Durchschnittswert dieser Signale unter Berücksichtigung einer Korrektur für das ständige Nachlassen der Gammaquelle ermittelt und den korrigierten Durchschnittswert der Impulsrate in eine Dichtemessung umwandelt;

— man als Antwort auf die aus der Dichteund/oder Tiefenmessung und mittels einer rechnergesteuerten Winde (3) erhaltenen Daten durch den Fisch eine zuvor gewählte Tiefe oder Dichte untersucht oder ihn laufend einen gekrümmten Weg oberund unterhalb einer kritischen Dichteschicht verfolgen läßt, die die schiffbare Tiefe bestimmt;

— man alle gesammelten Daten mittels eines Rechners (55) speichert, die Informationen in seinem Hauptspeicher aufbewahrt, die Informationen untersucht und analysiert und sie in ein visuelles Anzeigesystem (62, 63) umwandelt, das die schiffbare Tiefe anzeigt.

10. Verfahren nach Anspruch 9, dadurch gekennzeichnet, daß die Sichtanzeigevorrichtung ein Graphiktisch (63) ist.

11. Verfahren nach einem der Ansprüche 9 und 10, dadurch gekennzeichnet, daß die Position des Fisches (1) bezüglich Fixpunkten auf dem Festland (60, 61, 611) bestimmt wird durch die Lokalisierung des Fisches (1) bezüglich des Schleppschiffes (4) mit Hilfe eines im Fisch (1) angeordneten Transponders (50) und mindestens eines Signalumformers an Bord des Schleppschiffes (4) und durch die Lokalisierung des Schleppschiffes (4) selbst bezüglich Fixpunkten auf dem Festland (60, 61, 611), von wo aus Ortungssignale ausgesandt werden.

12. Verfahren nach einem der Ansprüche 9 und 10, dadurch gekennzeichnet, daß die Position des Fisches (1) bezüglich Fixpunkten auf dem Festland (60, 61, 611) bestimmt wird durch die Lokalisierung des Fisches (1) bezüglich des Schleppschiffes (4) durch eine Berechnung, die die Längenmessung des von der Winde (3) abgewickelten Kabels (2) und die durch den im Fisch (1) angeordneten Tiefendetektor (22) bestimmte Tiefenmessung des Fisches (1) kombiniert, und durch die Lokalisierung des Schleppschiffes selbst bezüglich Fixpunkten auf dem Festland (60, 61, 611), von wo aus Ortungssignale ausgesandt werden.

**Claims**

1. Towed densimeter system for the continuous measurement of the density as a function of the depth of marine silt, comprising

— a fish towed by a tug and equipped with a means of measuring the density of the marine silt through which it passes, and with a depth sensor;

— a cable making it possible to tow the fish and to transmit data;

— a winch for manoeuvring the towed fish, as a function of the data which it has transmitted;

— means for determining the position of the tug relative to fixed points on land; characterized in that:

— the said towed densimeter system functions in an autonomous manner and comprises means for locating the towed fish (1) relative to the tug (4);

— the towed fish (1) has a hydrodynamic, pressure-balanced profile and is designed to enable it to pass through a marine silt (5) of density up to 1.4 at a speed of at least two knots;

— the means for measuring the density of the silt (5) traversed is a high-speed nuclear transmission probe comprising a radioactive source (19) and a sensor (21) and provided with safety shields against radiation;

— the winch (3) is controlled by a computer (55) as a function of the data transmitted, the said computer (55) being installed on board the tug (4) in order to collect all the data transmitted by the fish (1) and also to record the time and the position of the tug (4) in the harbour, to establish at regular intervals an average of the instantaneous count rates of the sensor (21) and to convert it to a density reading, to store all the data in its main memory, to retrieve and calculate all the inter-relationships and, in response to the results obtained and as a function of a preselected programme, to regulate and control the operation of the winch (3) so that it causes the towed fish (1) to ascend or descend in order to seek a preselected depth or density, or causes it to follow an undulating trajectory within a preselected contour of density, and to display the synthesis of the readings with the aid of a visual display device (62, 63).

2. Towed densimeter system according to Claim 1, characterized in that the towed fish (1) possesses a frontal cross-section in the form of an inverted U-shaped tunnel (18) and a lateral cross-section in the form of an aircraft wing (11) and possesses in the median position at the end part a downward-facing inverted vertical aileron (12) having two horizontal articulated flaps (13) on either side of and above the inverted aileron (12).

3. Towed densimeter system according to either of Claims 1 and 2, characterized in that the nuclear transmission probe (19, 21) of the fish (1) comprises a safety shielding system against radiation, which comprises a piston (37) which carries the radioactive source (19) and maintains it within a lead-shielded housing by means of a safety return spring (32) when the apparatus is not operating, the piston (37) being, in operation, pushed back outwards by an actuating member (38) having a cam (39), in order that the source (19) should come opposite a narrow slot (40) opposite the sensor (21) of the nuclear transmission probe (19, 21).

4. Towed densimeter system according to any one of Claims 1 to 3, characterized in that the winch (3) is fitted with an auxiliary motor (44) for raising the equipment in the event of a failure of the electricity supply on board the tug (4).

5. Towed densimeter system according to any one of Claims 1 to 4, characterized in that the visual display device of the computer (55) is a graph plotter (63).

6. Towed densimeter system according to any one of Claims 1 to 5, characterized in that the means for locating the towed fish (1) relative to the tug (4) consist of a transponder (50) accommodated in the fish (1) and at least one transducer on board the tug (4).

7. Towed densimeter system according to any one of Claims 1 to 5, characterized in that the means for locating the towed fish (1) relative to the tug (4) comprise means for measuring the length of the cable (2) unwound from the winch (3), a means for measuring the depth of the fish (1) consisting of the depth sensor (22) accommodated in the fish (1), and means for calculating the position of the fish (1) from the said measurements.

8. Towed densimeter system according to any one of the preceding claims, characterized in that the means for determining the position of the tug (4) relative to fixed points on land (60, 61, 611) consist of at least three reference signal transmitters and at least one pick-up for the signals on board the tug (4).

9. Process for determining the navigable depth, in which, by means of a tug and a suitable cable, a fish is dragged through layers of marine silt and the following are determined in a continuous and simultaneous manner: (a) the density and depth of the layer of silt passed through by means accommodated in the fish; (b) the position of the fish relative to fixed points on land, characterized in that:

— a fish (1) is used which is pressure-balanced and designed to permit its passage through a marine silt (5) of a density of up to 1.4 at a speed of at least two knots;

— the density of the layer of silt (5) is continuously determined by means of a nuclear transmission probe (19, 21) accommodated in the fish (1), this being done by measuring the attenuation of the instantaneous count rate for the gamma rays emitted by the source (19) and captured by the sensor (21), establishing the average of the signals at regular intervals, with correction for the daily decay of the gamma source, and converting the corrected average of the count rate into a density reading;

— in response to the data derived from measuring the density and/or depth, and by means of a winch controlled by computer, the fish is caused to seek a preselected density or depth, or is caused to follow an undulating trajectory in continuous manner above and below a layer of critical density determining the navigable depth;

— all the data collected are recorded by means of a computer (55), the information is stored in its main memory, and the information is retrieved and analysed, and converted into a visual display system (62, 63) showing the navigable depth.

10. Process according to Claim 9, characterized in that the visual display device is a graph plotter (63).

11. Process according to either of Claims 9 and 10, characterized in that the position of the fish (1) relative to fixed points on land (60, 61, 611) is determined by locating the fish (1) relative to the tug (4) by means of a transponder (50) accommodated in the fish (1) and at least one transducer on board the tug (4), and by locating the tug (4) itself relative to the fixed points on land (60, 61, 611) from which reference signals are transmitted.

12. Process according to either of Claims 9 and 10, characterized in that the position of the fish (1) relative to fixed points on land (60, 61, 611) is determined by locating the fish (1) relative to the tug (4) by a calculation combining measurement of the length of cable (2) unwound from the winch (3) and measuring the depth of the fish (1) as given by the depth sensor (22) accommodated in the fish (1) and by locating the tug itself relative to the fixed points on land (60, 61, 611) from which reference signals are transmitted.

Fig.1.

Fig.2.

EP 0 207 038 B1

Fig. 3.

Fig. 4.

Fig. 5.

19

Fig. 7.

Fig. 6.

Fig. 12.

*Fig.8.*

*Fig. 9.*

*Fig. 11.*

*Fig. 10.*